# EUROPÄISCHE PATENTANMELDUNG

(11) **EP 3 647 376 A1**
(43) Veröffentlichungstag der Anmeldung: **06.05.2020**
(21) Anmeldenummer: 19198522.5
(22) Anmeldetag: 20.09.2019
(51) Int. Cl.: C09D 5/00

(54) **ZUSAMMENSETZUNG FÜR ANZEIGEELEMENTE**

(30) Priorität: 31.10.2018 DE 102018127252
(71) Anmelder: KM Innopat GmbH, 83727 Schliersee (DE)
(72) Erfinder: BITZER, Thomas, 41066 Mönchengladbach (DE); MOLLENHAUER, Dirk, 45257 Essen (DE)
(74) Vertreter: Beckord & Niedlich Patentanwälte PartG mbB

(57) **Zusammenfassung**

Die Erfindung betrifft eine Zusammensetzung, welche eine Transluzenz für elektromagnetische Wellen aufweist, sowie ein Objekt (3), vorzugsweise ein Anzeigeelement (3), umfassend ein Trägerelement (5), auf welches zumindest bereichsweise eine erste Schicht (6) mit einer solchen Zusammensetzung aufgebracht ist. Des Weiteren betrifft die vorliegende Erfindung ein Verfahren zur Herstellung einer Zusammensetzung sowie eines erfindungsgemäßen Objekts. Weiterhin betrifft die Erfindung die Verwendung der erfindungsgemäßen Zusammensetzung bzw. des erfindungsgemäßen Objekts.

## Beschreibung

Die Erfindung betrifft eine Zusammensetzung, welche eine Transluzenz für elektromagnetische Wellen, insbesondere Licht, aufweist, sowie ein Objekt umfassend eine solche Zusammensetzung. Des Weiteren betrifft die vorliegende Erfindung ein Verfahren zur Herstellung einer Zusammensetzung sowie eines erfindungsgemäßen Objekts. Weiterhin betrifft die Erfindung die Verwendung der erfindungsgemäßen Zusammensetzung bzw. des erfindungsgemäßen Objekts.

Beleuchtbare Objekte, insbesondere beleuchtbare bzw. hinterleuchtbare Anzeigeelemente, werden häufig zur Visualisierung von Zeichen und/oder Schriftbildern, beispielsweise in Armaturen und/oder elektronischen Ausrüstungen oder dergleichen, insbesondere in Kraftfahrzeugen, eingesetzt. Die Anzeigeelemente weisen dabei im Allgemeinen eine Oberfläche auf, welche durch eine Hinterleuchtung entsprechende Symbole erscheinen lässt.

Zur Herstellung von solchen Anzeigeelementen werden üblicherweise im Siebdruckverfahren transluzente und deckende Schichten übereinander aufgetragen. In die deckenden Schichten werden dann Markierungen in Form von ausgeschnittenen Bereichen eingebracht, beispielsweise mittels Gravur, also durch lokales Abtragen von Material auf der Oberfläche. Alternativ können Markierungen durch Aussparung bei einem sich wiederholenden Druckvorgang erzeugt werden. Solche Markierungen können als Geometrien oder als Symbole, wie beispielsweise in Form von Zeichnungen oder in Form von Schriftbildern ausgestaltet sein.

Die transluzente Schicht wird in der Regel nicht, zumindest nicht an den markierten Stellen mit entfernt bzw. graviert. Die mit Hilfe der Gravur eingebrachten Markierungen sollen sich dann bei Hinterleuchtung optisch gegen den durch die deckende Schicht verbleibenden Hintergrund, also den nicht entfernten Bereich der deckenden Schicht abheben, da ja die bei der Hinterleuchtung abgestrahlten elektromagnetische Wellen bzw. das Licht durch die aus der transluzenten Zusammensetzung gebildeten Schicht hindurchdringen können. Dabei wird angestrebt, dass die Markierungen ohne eine Hinterleuchtung möglichst nicht sichtbar sind und bevorzugt die Oberfläche des Objekts ein möglichst einheitliches schwarzes Erscheinungsbild bietet. Hierzu sollte die transluzente Schicht die gleiche Farbe wie die deckende Schicht aufweisen, vorzugsweise schwarz.

Die Gravur in der deckenden Schicht erfolgt üblicherweise in Form einer Lasergravur bzw. Laserablation, bei welcher der bestrahlte Stoff durch einen lokal auftreffenden Laserstrahl so stark erhitzt wird, dass er verdampft oder verbrennt. Hierzu ist die deckende Schicht so ausgebildet, dass sie die Energie des verwendeten Laserstrahls, beispielsweise ein Infrarot-Laserstrahl, aufnimmt. Das Material der transluzenten Schicht ist dagegen so gewählt, dass es für den zur Gravur verwendeten Laserstrahl möglichst transparent ist und daher keine Energie aufnimmt.

Werden auf diese Weise Markierungen von Anzeigeelementen durch Laserablation erzeugt, kommt es jedoch bei der lokalen Entfernung der deckenden Schicht bei den bisher genutzten Materialien bzw. Materialkombinationen auch in der transluzenten Schicht sehr häufig zu Schmauchspuren und Ausfransungen, wodurch die Optik und manchmal sogar die Lesbarkeit der Markierungen vor allem an deren Rändern stark beeinträchtigt wird. Komplizierte Geometrien sind daher bisher nicht realisierbar. Zudem weisen die Markierungen oft eine hohe Restfarbigkeit in der transluzenten Schicht auf, wodurch die Anzeige auch bei einer Hinterleuchtung mit weißem Licht farbig erscheint und oft auch nicht deutlich genug in Erscheinung tritt.

Insofern Markierungen durch Drucken erzeugt werden, ergibt sich hierbei die Problematik von unscharfen Rändern, da ein solcher sich wiederholender Druckvorgang üblicherweise nicht so durchgeführt kann, dass dieser an exakt denselben Stellen erfolgt.

Es ist eine Aufgabe der vorliegenden Erfindung, eine Zusammensetzung, welche für eine transluzente Schicht genutzt werden kann, sowie ein Objekt umfassend eine solche Zusammensetzung, insbesondere ein Anzeigeelement, sowie Verfahren zur Herstellung derselben zur Verfügung zu stellen, welche dieses Problem adressieren.

Diese Aufgabe wird erfindungsgemäß durch eine Zusammensetzung gemäß Patentanspruch 1, ein Objekt gemäß Patentanspruch 6, ein Verfahren zur Herstellung der Zusammensetzung gemäß Anspruch 10 bzw. ein Verfahren zur Herstellung eines Objekts gemäß Patentanspruch 12 gelöst.

Eine erfindungsgemäße Zusammensetzung umfasst dabei
- zumindest eine achromatische Komponente und
- zumindest eine chromatische Komponente,
wobei die Zusammensetzung eine Transluzenz für Licht zumindest im infraroten Bereich und vorzugsweise im sichtbaren Bereich aufweist.

Die achromatische bzw. farblose Komponente im Sinne der vorliegenden Erfindung weist dabei die Eigenschaft auf, Licht beim Durchgang nicht in Spektralfarben zu zerlegen beziehungsweise ohne chromatische Aberration zu brechen. Die chromatische Komponente umfasst dagegen zumindest einen farbigen bzw. einen bunten Anteil.

Die erfindungsgemäße Zusammensetzung ist vorteilhaft ohne Hinterleuchtung blickdicht; insbesondere weist diese ein dunkles bzw. schwarzes Erscheinungsbild auf. Dagegen weist die Zusammensetzung bzw. ein Objekt, welches eine Schicht mit einer solchen Zusammensetzung aufweist, bei Hinterleuchtung bzw. bei Durchleuchtung eine Transluzenz, also eine partielle Durchlässigkeit für elektromagnetische Wellen, vorzugsweise für Licht auf, d. h. sie ist nicht opak bzw. blickdicht. Dabei kann die Zusammensetzung bei Hinter- bzw. Durchleuchtung auch eine Transparenz, also eine Bild- und/oder Blickdurchlässigkeit, aufweisen. Die Durchlässigkeit ist dabei auch von der Schichtdicke der erfindungsgemäßen Zusammensetzung abhängig.

Es hat sich überraschend herausgestellt, dass durch die Kombination einer achromatischen und einer chromatischen Komponente eine Zusammensetzung erreichbar ist, mit welcher eine transluzente Schicht erzeugbar ist, die in einem o. g. Schichtaufbau mit einer markierten Deckschicht einerseits ohne Hinterleuchtung mit bloßem Auge normalerweise nicht von der Deckschicht unterscheidbar ist, beispielsweise tiefschwarz sein kann, andererseits aber bei einer Hinterleuchtung die Markierungen klarer hervortreten lässt und so auch feinere Markierungen als bisher zulässt.

Insbesondere kann vorteilhaft die Bildung von Schmauchspuren stark reduziert oder nahezu verhindert werden.

Durch den Anteil der achromatischen Komponente kann zudem - wie später noch erläutert wird - insbesondere die Restfarbigkeit der Zusammensetzung bzw. eines Objekts, welches mit einer solchen Zusammensetzung beschichtet ist, vorteilhaft verringert bzw. moduliert, also verändert, werden.

Bevorzugt liegt die erfindungsgemäße Zusammensetzung in Form eines Lacks vor, d. h. als flüssiger oder fester Stoff, vorzugsweise als Beschichtungsstoff.

Des Weiteren betrifft die vorliegende Erfindung ein Objekt, mit einem Trägerelement, auf das zumindest bereichsweise eine Schicht umfassend eine erfindungsgemäße Zusammensetzung aufgebracht ist, wobei die Schicht vorzugsweise direkt auf die Oberfläche des Trägerelements aufgebracht ist.

Unter einem Trägerelement im Sinne der vorliegenden Erfindung ist ein beliebig geformter Träger bzw. eine Basis zu verstehen, auf den direkt oder indirekt zumindest in einem Bereich, in dem die Markierung angeordnet sein soll, eine Schicht mit der erfindungsgemäßen Zusammensetzung aufgebracht werden kann. "Indirekt" heißt dabei, dass sich zwischen einer Oberfläche des Trägerelements und der Schicht mit der erfindungsgemäßen Zusammensetzung noch mindestens eine weitere Schicht befindet, z. B. die Deckschicht, in die Markierungen eingebracht bzw. einzubringen sind. Gegebenenfalls kann das Trägerelement hierzu auf seiner Oberfläche modifiziert sein, beispielsweise mit einem oder mehreren hydrophoben oder hydrophilen Mitteln, um so eine bessere Haftung der erfindungsgemäßen Zusammensetzung auf der Oberfläche zu bewirken.

Auch betrifft die vorliegende Erfindung ein Verfahren zur Herstellung einer erfindungsgemäßen Zusammensetzung, wobei das Verfahren folgende Schritte umfasst:
(i) Bereitstellen einer achromatischen Komponente,
(ii) Bereitstellen einer chromatischen Komponente,
(iii) Zusammenführen der chromatischen Komponente und der achromatischen Komponente,
(iv) optional Zugabe der Mischung aus Schritt (iii) zu einem Polymer, insbesondere zu einem Acrylat-Polymer,
(v) optional Zugabe weiterer Additive.

Unter "Bereitstellen" wird dabei sowohl eine Herstellung vor Ort als auch ein Zuliefern einer achromatischen bzw. einer chromatischen Komponente verstanden. Eine Zusammenführung der chromatischen Komponente zu der achromatischen Komponente kann dabei beispielsweise von einem Mischvorgang begleitet sein. Dabei kann die Aufeinanderfolge der Zusammenführung der Komponenten auch so variiert werden, dass die achromatische Komponente zu der chromatischen Komponente zugegeben wird.

Optional kann die erfindungsgemäße Zusammensetzung, beispielsweise in Beutel, Dosen, Kanister oder sonstige Behältnisse, verpackt werden. Ein Verpackungsvorgang kann gegebenenfalls unter Ausschluss von Feuchtigkeit und/oder Sauerstoff erfolgen.

Auch umfasst die vorliegende Erfindung eine Zusammensetzung, insbesondere einen Lack, welche/r nach dem vorstehend beschriebenen Verfahren erhältlich ist bzw. erhalten wird.

Des Weiteren betrifft die vorliegende Erfindung ein Verfahren zur Herstellung eines Objekts, wobei das Objekt markierte Symbole bzw. eine markierbare Schicht umfasst, und wobei das Objekt mit einer erfindungsgemäßen Zusammensetzung versehen ist.

Bevorzugt handelt es sich bei dem Objekt um ein Anzeigeelement, welches vorzugsweise ohne Hinterleuchtung bzw. Durchleuchtung ein vorzugsweise blickdichtes, besonders bevorzugt ein dunkles, insbesondere ein schwarzes, Erscheinungsbild aufweist.

Dabei weist ein vorteilhaftes Verfahren zur Herstellung eines erfindungsgemäßen Objekts zumindest folgende Schritte auf:
(i) Beschichtung eines Trägerelements mit der erfindungsgemäßen Zusammensetzung, vorzugsweise mit einem Lack,
(ii) vorzugsweise Beschichtung des Trägerelements mit zumindest einer zweiten Schicht, wobei die zweite Schicht eine Komponente umfasst, welche Infrarotstrahlung absorbiert,
(iii) optional zumindest teilweises Entfernen der zweiten Schicht mit Hilfe einer Strahlungsquelle zum Erhalt einer Markierung, insbesondere eines Musters und/oder eines Symbols.

Ein mit der erfindungsgemäßen Zusammensetzung beschichtetes Trägerelement kann dabei als Halbzeug, also als vorgefertigtes Werkstück, hergestellt und in dieser Form (als ein bereits erfindungsgemäßes Objekt) (zwischen)gelagert werden und in einem weiteren Schritt, welcher nicht unmittelbar nach der Beschichtung des Trägerelements mit einer zweiten Schicht erfolgen muss, beispielsweise nach einer transportbedingten Lagerung, an einem anderen Ort bzw. Produktionsstätte zum Erhalt der Markierung weiterverarbeitet werden. Dies hängt u.a. davon ab, welche der Schichten direkt auf das Trägerelement aufgebracht wird und welche indirekt.

Bevorzugt wird zur Herstellung eines verkaufsfähigen erfindungsgemäßen Objekts das Trägerelement in dessen endgültiger Ausführungsform mit einer zweiten bzw. weiteren Schicht beschichtet, welche vorteilhaft eine Komponente aufweist, welche Infrarotstrahlung absorbiert. Bevorzugt handelt es sich bei dieser Komponente, wie später noch erläutert, um eine Kohlenstoff enthaltende Verbindung, insbesondere um Rußschwarz bzw. ein Schwarzpigment.. Besonders bevorzugt ist diese zweite Schicht als schwarz deckende Schicht, vorzugsweise als schwarz deckende Lackschicht, ausgebildet. Vorteilhaft weist die bevorzugte zweite Schicht bei Hinterleuchtung bzw. Durchleuchtung keine oder eine nur geringe Transluzenz auf. D. h. die zweite Schicht ist für Licht undurchlässig.

Unter der Bezeichnung Infrarotstrahlung (IR-Strahlung, Ultrarotstrahlung) werden hierbei elektromagnetische Wellen im Spektralbereich zwischen sichtbarem Licht und längerwelliger Terahertzstrahlung bezeichnet, wobei der Spektalbereich zwischen 10⁻³ und 7,8 x 10⁻⁷ (1 mm und 780 nm = Infrarotbereich) liegt.

Dabei kann sowohl die Beschichtung des Trägerelements mit der erfindungsgemäßen Zusammensetzung als auch mit der vorzugsweise zweiten bzw. einer weiteren Schicht mit Hilfe eines Sprühverfahrens, Tampondrucks, Siebdrucks und/oder Rollendruckverfahrens erfolgen. Die Beschichtung des Trägerelements erfolgt dabei vorteilhaft so, dass die erfindungsgemäße Zusammensetzung eine gute Verteilung auf der Oberfläche des Trägerelements aufweist und möglichst keine sichtbaren Unebenheiten erkennbar sind. Vorteilhaft bildet dabei die Beschichtung des Trägerelements mit der erfindungsgemäßen Zusammensetzung eine Haftunterlage für eine Beschichtung mit der zweiten Schicht, so dass auch die zweite Schicht schließlich eine ausreichende Haftung aufweist.

Grundsätzlich kann die Schichtreihenfolge aber auch getauscht werden, wenn dies im konkreten Anwendungsfall sinnvoll ist. So könnte wahlweise auch zunächst die Schicht, welche die IR-Strahlung absorbierende Komponente umfasst, als erste Schicht, und erst in einem nächsten Schritt die erfindungsgemäße Zusammensetzung auf das Trägerelement aufgebracht werden. Jedoch ist es bevorzugt, dass zunächst die erfindungsgemäße Zusammensetzung auf das Trägerelement aufgebracht wird, und in einem nächsten Schritt die Schicht, welche die IR-Strahlung absorbierende Komponente umfasst. Bevorzugt weist ein erfindungsgemäßes Objekt nur eine Schicht, welche die chromatische Komponente umfasst, und eine Schicht mit einer erfindungsgemäßen Zusammensetzung auf dem Trägerelement auf, d. h. weiter deckenden Schichten und/oder transluzenten Schichten sind nicht erforderlich.

Die Ausbildung von Markierungen erfolgt dabei, wie eingangs erwähnt, in der zweiten Schicht. Bevorzugt werden hierbei die Markierungen wie erwähnt mit Hilfe einer Strahlungsquelle, insbesondere mit Hilfe eines Laserstrahls, also über eine Art Gravur, erzeugt. Besonders bevorzugt erfolgt hierbei mit Hilfe des Laserstrahls mit hoher Leistungsdichte eine sogenannte Laserablation (*syn.* Laserverdampfung), wobei durch lokales Belichten der zweiten Schicht die IR-Strahlung absorbierende Komponente aus dieser Schicht abgetragen bzw. verdampft wird. Vorteilhaft erfolgt dabei keine wesentliche Ablation von Material aus der Schicht, welche die erfindungsgemäße Zusammensetzung umfasst, so dass die Markierungen klar sichtbar in Erscheinung treten.

Die mit Hilfe der Strahlungsquelle, vorzugsweise des Lasers, erhaltenen Markierungen können dabei beliebige Zeichen, vorzugsweise Muster, Symbol, Bilder oder dergleichen, insbesondere Schriftbildern, also eine Anordnung einer Schrift, umfassen. Die Zeichen weisen bevorzugt, aber nicht zwingend, einen Informationsgehalt auf, können also auch rein dekorativ sein.

Vorteilhaft weisen die Markierungen eines erfindungsgemäßen Objekts wie erwähnt bei Hinter- bzw. Durchleuchtung eine geringe Restfarbigkeit auf. Bevorzugt weisen die Markierungen keine Restfarbigkeit auf. Insbesondere kann die Restfarbigkeit der Markierungen eines solchen Objekts durch den Anteil der achromatischen Komponente der erfindungsgemäßen Zusammensetzung moduliert werden.

Prinzipiell bzw. in Abhängigkeit der Beschaffenheit bzw. des Materials des Trägerelements kann eine Laserbestrahlung bzw. Laserablation sowohl von der Seite erfolgen, auf welcher die zweite Schicht auf das Trägerelement aufgetragen ist, als auch von deren abgewandten Seite. Vorzugsweise erfolgt eine Laserbestrahlung auf der der zweiten Schicht abgewandten Seite. Von welcher Seite aus die Bestrahlung idealerweise erfolgt, kann aber auch vom verwendeten Lasertyp abhängen.

Die vorliegende Erfindung betrifft wie erwähnt insbesondere ein Objekt, vorzugsweise ein Anzeigeelement, welches nach dem vorstehend beschriebenen Verfahren erhältlich ist bzw. erhalten wird.

Eine erfindungsgemäße Zusammensetzung wird daher also vorteilhaft als flüssiges oder festes Material zur Herstellung eines Objekts mit einer oder mehreren Markierung/en, also mit ausgeschnittenen Bereichen, welche bei Hinterleuchtung bzw. einer Durchleuchtung Markierungen, insbesondere Symbole, in Erscheinung treten lässt, verwendet.

Beispiele für eine solche erfindungsgemäße Verwendung sind Anzeigeelemente oder Bedienungsfelder in elektronischen Ausrüstungen und/oder Armaturen, wie beispielsweise eines Armaturenbretts, Schalteinrichtungen und -systeme, Schaltflächenmarkierung etc. Insbesondere kann die erfindungsgemäße Zusammensetzung zur Herstellung von erfindungsgemäßen Objekten in Form von Folien für elektronische Ausrüstungen und/oder Armaturen, beispielsweise für Tastaturen, als Front- und/oder Dekorfolie für Geräte und Maschinen, als Folienverpackung etc. verwendet werden.

Eine erfindungsgemäße elektronische Ausrüstung und/oder Armatur (z.B. im Cockpit eines Fahrzeugs etc.) weist dementsprechend ein erfindungsgemäßes Objekt z.B. als ein Anzeigeelement oder eines Teils eines Anzeigeelements auf.

Weitere, besonders vorteilhafte Ausgestaltungen und Weiterbildungen der Erfindung ergeben sich aus den abhängigen Ansprüchen sowie der nachfolgenden Beschreibung, wobei die unabhängigen Ansprüche einer Anspruchskategorie auch analog zu den abhängigen Ansprüchen und Ausführungsbeispielen bzw. Beschreibungsteilen einer anderen Anspruchskategorie weitergebildet sein können und insbesondere auch einzelne Merkmale des Ausführungsbeispiels bzw. Varianten zu neuen Ausführungsbeispielen bzw. Varianten kombiniert werden können.

Gemäß einer bevorzugten Ausführungsform ist die achromatische Komponente der Zusammensetzung ausgewählt aus einem polyzyklischen aromatischen Kohlenwasserstoff, bevorzugt aus einem polyzyklischen aromatischen Kohlenwasserstoff mit kondensierten Benzolringen, insbesondere aus einem Perylen (*syn.* peri-Dinaphthylen). Ein Perylen kann beispielsweise unter der Bezeichnung C.I. Pigment Schwarz 32 von der Firma BASF (Ludwigshafen, Deutschland) oder von der Firma Kremer Pigmente (Aichstetten, Deutschland) bezogen werden. Eine solche achromatische Komponente bewirkt vorteilhaft, dass die Markierungen, also die ausgeschnittenen Bereiche, und somit das gesamte Objekt, vorzugsweise das Anzeigeelement, ohne Durchleuchtung bzw. Hinterleuchtung vorzugsweise dunkel und blickdicht, insbesondere schwarz, erscheint, bei Durchleuchtung jedoch transparent, vorzugsweise transluzent, ist.

Insofern eine bevorzugte Zusammensetzung in Form eines flüssigen Lacks vorliegt, liegt der Gehalt der achromatischen Komponente bevorzugt bei mindestens 0,5 Gew.-%, besonders bevorzugt bei mindestens 1 Gew.-%, insbesondere bei mindestens 1,5 Gew.-%, an der Zusammensetzung. Bevorzugt liegt der Anteil der achromatischen Komponente in der vorteilhaften Zusammensetzung höchstens bei 3 Gew.-%, besonders bevorzugt bei höchstens 2,5 Gew.-%, insbesondere bei höchstens 2 Gew.-%, insbesondere bevorzugt bei etwa 1,7 Gew.-%.

Die chromatische Komponente einer vorteilhaften Zusammensetzung ist bevorzugt ausgewählt aus der Gruppe der gesättigten sechsgliedrigen Heterocyclen, insbesondere aus einem Dioxazin. Ein solches Dioxazin kann beispielsweise unter der Bezeichnung C.I. Pigment Violet 23 (*syn.* Carbazolviolett), C.I. Pigment Violet 37 oder C.I. Pigment Blue 80 über die Firma BASF (Ludwigshafen, Deutschland) oder von der Firma Kremer Pigmente (Aichstetten, Deutschland) bezogen werden.

Insofern eine bevorzugte Zusammensetzung in Form eines flüssigen Lacks vorliegt, liegt der Gehalt der chromatischen Komponente bevorzugt bei mindestens 1,5 Gew.-%, besonders bevorzugt bei mindestens 2 Gew.-%, insbesondere bei mindestens 2,5 Gew.-%. Höchstens liegt der bevorzugte Anteil der achromatischen Komponente in der vorteilhaften Zusammensetzung bei 4 Gew.-%, besonders bevorzugt bei höchstens 3,5 Gew.-%, insbesondere bei höchstens 3 Gew.-%, insbesondere bevorzugt bei etwa 2,8 Gew.-%.

Unabhängig davon, ob die vorteilhafte Zusammensetzung in flüssiger Form oder in Form eines Feststoffs, z. B. in Form eines getrockneten Lacks vorliegt, liegt das Verhältnis der achromatischen Komponente zu der chromatischen Komponente bevorzugt bei mindestens 0,4 und/oder bei höchstens 0,8. Insbesondere liegt das Verhältnis der achromatischen zur chromatischen Komponente bei 0,6.

Gemäß einer weiter bevorzugten Ausführungsform umfasst eine vorteilhafte Zusammensetzung, insbesondere ein Lack, weitere Zusatzstoffe bzw. Additive, welche vorzugsweise aus der Klasse der Bindemittel, Füllstoffe, Pigmente, Lösemittel, Harzen und/oder Polymeren ausgewählt sind.

Prinzipiell bzw. in Abhängigkeit der Anwendung kann die Auswahl der chromatischen und der achromatischen Komponente der Zusammensetzung so erfolgen, dass bei Durch- bzw. Hinterleuchtung eine gewisse Farbigkeit bzw. Restfarbigkeit zu erkennen ist, eine gewisse Restfarbigkeit also moduliert werden kann.

Gemäß einer besonders bevorzugten Ausführungsform sind die achromatische und die chromatische Komponente der vorteilhaften Zusammensetzung so ausgewählt, dass diese bei Durchleuchtung bzw. Hinterleuchtung des Objekts bzw. der Markierungen keine bzw. keine wesentliche Farbigkeit bzw. Restfarbigkeit der ausgeschnittenen Bereiche bewirkt.

Im Zuge der Entwicklung der Zusammensetzung hat sich herausgestellt, dass der Partikeldurchmesser der achromatischen bzw. der chromatischen Komponente vorteilhaft so ausgewählt ist, dass dieser bevorzugt im Bereich von wenigen Nanometern (nm) bis zu wenigen Mikrometern (um), beispielsweise im Bereich von mindestens 10 nm und/oder bis zu höchstens 5 µm, liegt. Partikel dieser Größe können beispielsweise durch Mahlen in einer Perlmühle mit Glasperlen erhalten werden.

Gemäß einer weiter bevorzugten Ausführungsform umfasst eine vorteilhafte Zusammensetzung

| | |
|---|---|
| Achromatische Komponente | 0,5 bis 3 Gew.-% |
| Chromatische Komponente | 0,1 bis 10 Gew.-% |
| Bindemittel | 10 bis 50 Gew.-% |
| Lösemittel | 0 bis 2 Gew.-% |
| Dispergiermittel | 0 bis 10 Gew.-% |
| Netzmittel | 0 bis 1 Gew.-% |
| Verlaufsadditiv (optional) | 0 bis 1 Gew.-% |
| Füllstoff (optional) | 0 bis 15 Gew.-% |

Die oben genannten Angaben beziehen sich auf die getrocknete Zusammensetzung.

Eine bevorzugte Zusammensetzung kann dabei wie erwähnt in Form eines Feststoffs oder Pulvers, also in getrockneter Form, wie beispielsweise in Form eines getrockneten Lacks, vorliegen und daher lediglich einen geringen Anteil eines Lösungsmittels enthalten. Alternativ kann eine bevorzugte Zusammensetzung in Form einer flüssigen Dispersion, beispielsweise in Form eines flüssigen Lacks, vorliegen.

Insofern die bevorzugte Zusammensetzung in Form eines Feststoffs oder eines Pulvers vorliegt, enthält diese vorteilhaft kein Lösemittel. Höchstens enthält ein solcher bevorzugter Feststoff oder ein Pulver einen Gehalt an Lösungsmittel von bis zu 2 Gew.-%.

Das Lösemittel kann jedoch gegebenenfalls beigemischt werden, um beispielsweise aus dem Feststoff oder Pulver eine flüssige Dispersion, insbesondere einen flüssigen Lack, herzustellen, welche/r dann einen Anteil von etwa 10 Gew.-% bis etwa 90 Gew.-% des Lösungsmittels aufweist.

Ein flüssiger Lack kann als flüssige Dispersion auf eine Oberfläche aufgetragen werden und die in dem flüssigen Lack enthaltenen Lösungsmittel im Anschluss, beispielsweise bei Raumtemperatur, getrocknet werden, so dass die getrocknete Zusammensetzung, insbesondere der getrocknete Lack, wiederum keinen bzw. einen lediglich geringen Anteil von bis zu 2 Gew.-% an Lösungsmittel enthält.

Des Weiteren kann eine bevorzugte Zusammensetzung gegebenenfalls ein Dispergiermittel und/oder ein Netzmittel und/oder ein Verlaufsadditiv und/oder einen Füllstoff enthalten.

Bevorzugt umfasst die Zusammensetzung ein Bindemittel, welches vorzugsweise aus der Klasse der Polymere ausgewählt ist. Bevorzugt ist das Polymer aus der Gruppe der Acrylate und/oder der Polyester und/oder der Polyurethane und/oder der Epoxy-haltigen Polymere und/oder der Polycarbonate und/oder der Silicone und/oder deren Harzen ausgewählt. Besonders bevorzugt ist das Polymer aus einem Acrylat, insbesondere aus einem Polyisocyanat-vernetztem Acrylatharz, ausgewählt.

Insofern die Zusammensetzung ein Lösungsmittel umfasst, ist dieses vorzugsweise aus zumindest einem organischen Lösungsmittel, besonders bevorzugt aus zumindest zwei Lösungsmitteln, insbesondere aus Methoxypropylacetat und/oder Butylacetat, ausgewählt.

Gemäß einer weiter bevorzugten Ausführungsform umfasst die Zusammensetzung zumindest ein Netz- und/oder Dispergiermittel und/oder ein Verlaufsadditiv. Unter einem Netzmittel wird dabei eine natürliche oder synthetische Verbindung verstanden, welche die Oberflächenspannung von Wasser oder anderen Flüssigkeiten herabsetzt und so eine gute Benetzung der Zusammensetzung mit der Oberfläche, auf welche die Zusammensetzung aufgebracht wird, ermöglicht.

Ein Dispergiermittel bezeichnet ein Additiv, welches das Dispergieren, also die Durchmischung von mindestens zwei, eigentlich nicht mischbaren Phasen bzw. Substanzen ermöglicht oder stabilisiert; ein Verlaufsadditiv setzt die Grenzflächenspannung zwischen der vorteilhaften Zusammensetzung und der Oberfläche, auf welche die Zusammensetzung aufgebracht wird, herab, so dass sich diese möglichst gleichmäßig auf der Oberfläche des Trägerelements des Objekts verteilen kann.

Wie bereits eingangs erläutert, betrifft die vorliegende Erfindung ein Objekt, vorzugsweise ein Anzeigeelement oder eines Teils eines Anzeigeelements, umfassend ein Trägerelement, welches zumindest bereichsweise eine Schicht mit der erfindungsgemäßen Zusammensetzung umfasst.

Prinzipiell kann das Trägerelement aus unterschiedlichen Materialien ausgebildet sein, beispielsweise aus Glas und/oder aus Kunststoff. Ein solches Trägerelement Objektträger weist vorteilhaft eine gute Hitzeresistenz und mechanische Stärke auf. Vorzugsweise ist das Trägerelement flächig z. B. in Form einer flexiblen, beispielsweise auch dünnen Folie oder in Form einer im Wesentlichen formstabilen Folie oder Platte oder dergleichen. Bevorzugt liegt die Dicke eines solchen Trägerelements bei mindestens 10 µm und/oder bei höchstens 10 mm. Ein solches flächiges Trägerelement bzw. flächiger Träger kann hierbei auch in sich gewölbt oder gebogen sein. Ein Beispiel hierfür sind z. B. tiefgezogene Folien. Weiterhin kann ein Trägerelement auch mehrere Schichten aufweisen, z. B. als Folienlaminat ausgebildet sein.

Um eine möglichst gute Durchleuchtung bzw. Hinterleuchtung der Markierungen des Objekts, zu gewährleisten, ist das Trägerelement zumindest im Bereich der Markierungen vorteilhaft selbst aus einem transluzenten, besonders bevorzugt aus einem transparenten Material aufgebaut.

Bevorzugt handelt es bei dem Trägerelement wie gesagt um eine Platte oder eine Folie, besonders bevorzugt um eine transparente Glasplatte oder eine transparente Kunststoffplatte oder -folie.

Gemäß einer bevorzugten Ausführungsform umfasst das Trägerelement einen Kunststoff, besonders bevorzugt einen Kunststoff auf Basis eines thermoplastischen Polymers, insbesondere auf Basis von Acryl, Polycarbonat (PC), Acrylnitrylbutadienstyrol (ABS), Polyvinylchlorid (PVC), Polypropylen (PP), Polyethylen (PE), (Polyoxymethylen (POM, Polyacetal), Polyphenylensulfid (PPS) und/oder Polyamid (PA). Insbesondere kann das Trägerelement ein Acrylglas umfassen, insbesondere bevorzugt aus Polymethylmethacrylat (PMMA, Poly(methyl-2-methylpropenoat), Acrylglas).

Gemäß einer bevorzugten Ausführungsform liegt die Schichtdicke der erfindungsgemäßen Zusammensetzung, insbesondere des Lacks, auf dem Trägerelement vorzugsweise bei mindestens 10 µm, besonders bevorzugt bei mindestens 50 µm. Höchstens liegt die bevorzugte Schichtdicke der erfindungsgemäßen Zusammensetzung bei 200 µm, besonders bevorzugt bei 100 µm. Eine solche Schichtdicke gewährleistet vorteilhaft einen homogenen Schichtauftrag unter Beibehaltung der transluzenten Eigenschaft für sichtbares Licht und auch für einen unten noch spezifizierten IR-Laser für die Gravur.

In seiner endgültigen bevorzugten Ausführungsform ist auf dem Trägerelement wie oben beschrieben eine zweite bzw. weitere Schicht aufgebracht, welche vorteilhaft eine IR-Strahlung absorbierende Komponente umfasst. Vorzugsweise ist diese IR-Strahlung absorbierende Komponente ausgewählt aus Rußschwarz bzw. Schwarzpigment. Besonders bevorzugt handelt es sich bei dem Schwarzpigment um Pigmentpartikel mit einer Partikelgröße im Bereich von Nanometern (nm). Ein Schwarzpigment kann beispielsweise unter der Bezeichnung C.I. Pigment Black 6 oder 7 bei der Firma BASF (Deutschland) bezogen werden.

Eine derartige IR-Strahlung absorbierende Komponente hat sich u. a. als besonders geeignet für eine weitere (laserbare bzw. gravierbare) Schicht in Kombination mit einer Schicht mit der erfindungsgemäßen Zusammensetzung herausgestellt.

Im Zuge der Erstellung von Markierungen kann eine solche zweite Schicht in lokalen Bereichen vorzugsweise mit einem Nd-YAG (Neodym-dotierter Yttrium-Aluminium-Granat)-Laser bei einer Wellenlänge im Infrarot-Bereich (1064 nm) bestrahlt werden und so die chromatische Komponente, insbesondere das Schwarzpigment, an vorgegebenen Stellen ablatiert werden, so dass die Markierungen bei Durchleuchtung bzw. Hinterleuchtung mit einer Strahlungsquelle, vorzugsweise mit sichtbarem Licht, zu erkennen sind. Vorzugsweise erfolgt die Laserablation mit einem gepulsten Laserstrahl bei einer bevorzugten Energiedichte im Bereich von etwa 1 J/cm².

Alternativ kann eine Bestrahlung jedoch auch mit einem anderen Laser und bei anderen Energiedichten erfolgen. Gemäß einer weiter bevorzugten Ausführungsform erfolgt eine Bestrahlung mit einem CO₂ Laser in den Bändern von 9,4 µm und von 10,6 µm, insbesondere im Band von 10,6 µm, erfolgen. Eine hierfür eingesetzte Energiedichte liegt vorzugsweise im Bereich von mindestens 10 J/cm² und/oder von im Bereich von höchstens 50 J/cm², besonders bevorzugt im Bereich von 30 J/cm².

Prinzipiell können sich die erfindungsgemäße Zusammensetzung und die optionale zweite bzw. weitere Schicht auch auf mehr als einer Oberfläche des Trägerelements befinden. Ganz besonders bevorzugt befinden sich jedoch die erfindungsgemäße Zusammensetzung und die optionale zweite bzw. weitere Schicht auf lediglich einer Oberfläche des Trägerelements.

Grundsätzlich kann es auch gewünscht sein, dass die Markierungen des Objekts bzw. des Trägerelements, vorzugsweise in unterschiedlichen räumlichen Bereichen, eine unterschiedliche Restfarbigkeit und so beispielsweise einen unterschiedlichen Informations- und/oder Anwendungsbereich kennzeichnen.

Ein bevorzugtes Objekt kann auch bevorzugt eine Strahlungsquellenanordnung zur Hinterleuchtung der Markierung umfassen, welche vorzugsweise sichtbares Licht aussenden. Eine geeignete Strahlungsquellenanordnung kann vorzugsweise eine Anzahl (also mindestens eine) von Strahlungsquellen aufweisen, bevorzugt LEDs (Licht emittierende Diode; *syn.* Leuchtdiode) und/oder OLEDs (organische Licht emittierende Diode).

Die Strahlungsquellenanordnung ist vorteilhafterweise ein- und ausschaltbar. Vorzugsweise ist sie so ausgebildet, dass die Intensität und/oder Farbe bzw. Farbtemperatur des abgestrahlten Lichts veränderbar, d.h. steuerbar und/oder regelbar ist. Insbesondere kann die Strahlungsquellenanordnung hierzu mehrere Strahlungsquellen, insbesondere LEDs und/oder OLEDs, oder Gruppen von Strahlungsquellen aufweisen, welche Licht in unterschiedlichen Frequenzbereichen bzw. mit unterschiedlichen Farbtemperaturen aussenden, so dass durch eine Verstellung der relativen Intensitäten das insgesamt von der Strahlungsquellenanordnung ausgesandte Gesamtlichtspektrum bzw. die Gesamt-Farbtemperatur modifiziert werden kann. Besonders bevorzugt umfasst die Strahlunsquellenanordnung flächige Strahlungsquellen, beispielsweise in Form von OLEDs oder Elektrolumineszenz-Schichten.

Die Erfindung wird im Folgenden unter Hinweis auf die beigefügten Figuren anhand eines Ausführungsbeispiels noch einmal näher erläutert. Dabei sind in den verschiedenen Figuren gleiche Komponenten mit identischen Bezugsziffern versehen. Es zeigen:
Figur 1 eine schematische Darstellung eines Schnitts durch ein einfaches Ausführungsbeispiels eines erfindungsgemäßen Objekts mit zusätzlichen Komponenten zur Veranschaulichung von Prozessschritten bei der Herstellung und zur möglichen Verwendung des Objekts;
Figur 2 einer schematischen Darstellung eines Schnitts durch ein einfaches Ausführungsbeispiel eines erfindungsgemäßen Objekts mit zusätzlichen Komponenten zur Veranschaulichung einer Variante von Prozessschritten bei der Herstellung und zur möglichen Verwendung des Objekts
Figur 3 eine Draufsicht auf ein Ausführungsbeispiel eines erfindungsgemäßen Objekts, hier einer Deckplatte als Anzeigeelement auf einem Schaltknauf eines Kraftfahrzeugs.

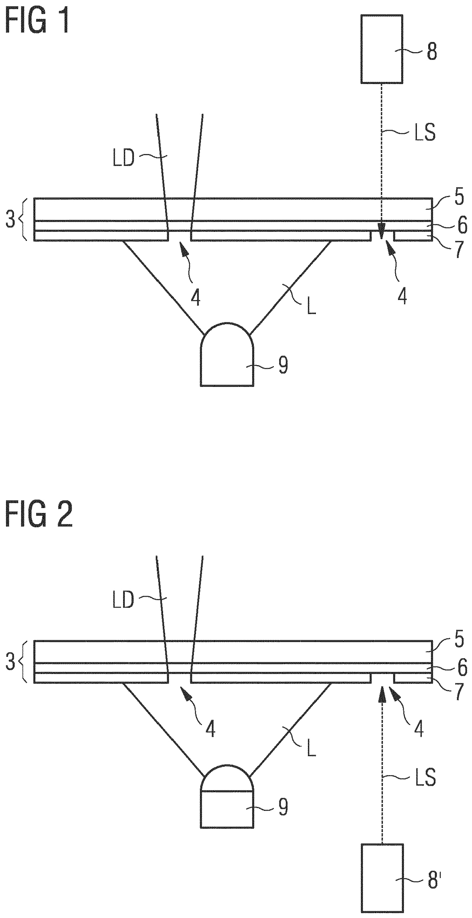

Das in Figur 1 dargestellte Ausführungsbeispiel eines erfindungsgemäßen Objekts 3 weist ein flächiges Trägerelement 5, hier eine Platte 5, aus transparentem Kunststoff, bevorzugt aus einem PMMA auf. Die Dicke der Platte beträgt beispielsweise zwischen 0,3 mm und 10 mm.

Das Trägerelement 5 ist auf einer Unterseite zunächst (z. B. direkt) mit einer ersten Schicht 6 beschichtet, welche aus einem Lack mit einer erfindungsgemäßen Zusammensetzung erzeugt wurde. Als "Unterseite" wird hierbei die Seite des Trägerelements 5 bezeichnet, welche von der Sichtseite abgewandt ist. Die Sichtseite ist im bestimmungsgemäßen Einsatz des Objekts 3 einem Betrachter zugewandt ist. Die Hinterleuchtung des Objekts 3 erfolgt also im Einsatz von der Seite aus, zu der die Unterseite des Trägerelements 5 weist.

Im vorliegenden Ausführungsbeispiel wurde für die erste Schicht 6 folgende Zusammensetzung verwendet.

### Beispiel 1: Herstellung einer erfindungsgemäßen Zusammensetzung

Im Folgenden wird die Herstellung einer lösemittelhaltigen erfindungsgemäßen Zusammensetzung beschrieben.

| **Bestandteile** | **Konzentration** |
|---|---|
| C.I. Pigment Schwarz 32 | 1,7 Gew.-% |
| C.I. Pigment Violet 23 (10 %ig) | 2,8 Gew.-% |
| Polyisocyanat-vernetzendes Acrylharz (Synthalat A 055) | 37,5 Gew.-% |
| Polyisocyanat-vernetzendes Acrylharz (Synthalat A 065) | 15 Gew.-% |
| Butylacetat (98 %) | 10 Gew.-% |
| Copolymer mit pigmentaffinen Gruppen (Disperbyk 2055) | 0,7 Gew.-% |
| Siliconacrylat-Copolymer (Byk 3550) | 0,3 Gew.-% |
| Celluloseacetobutyrat (20 %ig, CAB 531-1) | 10 Gew.-% |
| Methoxypropylacetat | 22 Gew.-% |

Die genannten Bestandteile werden abgewogen. Die Acrylharze (Synthalat A 055 und Synthalat A 065) werden mit ca. 60 % der Menge des Butylacetats (98 %ig, Chemical Portal, Göttingen, Deutschland) in einem Dissolver (Mastermix 15, Netzsch Feinmahltechnik, Selb, Deutschland) vermischt. Im Anschluss wird das Dispergiermittel (Disperbyk 2055, Byk-Chemie, Wesel, Deutschland) und C.I. Pigment Schwarz 32 (Kremer Pigmente, Aichstetten, Deutschland) unter weiterem Rühren hinzugegeben und der Rest des Butylacetats hinzugegeben, wodurch eine mahlfähige Dispersion entsteht. Die Mischung wird anschließend in einer Perlmühle auf eine Kornfeinheit von ca. 5 µm gemahlen. Im Anschluss wird das Siliconacrylat-Copolymer (Byk 3550) und Celluloseacetobutyrat (20 %ig, CAB 531-1) unter Rühren in einem Dissolver (Mastermix 15, Netzsch Feinmahltechnik, Selb, Deutschland) zugegeben und vermischt. Danach wird eine 10 %ige Lösung von C.I. Pigment Violet 23 (Kremer Pigmente, Aichstetten, Deutschland) so lange zugegeben, bis ein neutraler (achromatischer) Schwarzton erreicht wird (eine Bestimmung des neutralen Schwarztons kann beispielsweise über ein Spektrophotometer (ERX30, X-rite, Neu-Isenburg, Deutschland). Schließlich wird die Mischung unter Rühren mit Methoxypropylacetat (BASF, Ludwigshafen, Deutschland) vermischt.

Der so erzeugte Lack 6 wird mit einer Spritzpistole auf die Oberfläche des Trägerelements 5 aufgetragen, um eine Schicht 6 mit einer möglichst gleichmäßigen Dicke zwischen ca. 10 µm und 200 µm, bevorzugt von ca. 75 µm, zu erzeugen.

Nach dem Trocken der ersten Schicht 6 (bei Raumtemperatur) wird, ebenfalls mit einer Spritzpistole, eine zweite Schicht 7 auf die erste Schicht 6 aufgebracht. Die Dicke dieser Schicht beträgt zwischen ca. 50 µm und 200 µm, bevorzugt ca. 100 µm.

Das Material für diese zweite Schicht 7 ist ein Rußschwarz enthaltender Decklack (PurA, Warnecke & Boehm, Schliersee, Deutschland).

Beide Schichten 6, 7 sind somit tiefschwarz. Während die erste Schicht 6 jedoch für Infrarotstrahlung und für sichtbares Licht im Wesentlichen durchlässig ist, absorbiert die zweite Schicht 7 Infrarotstrahlung und sichtbares Licht.

Dieser Effekt wird genutzt, um in die zweite Schicht 7 mittels eines von einem Laser 8 erzeugten Infrarot-Laserstrahls LS eine Markierung 4 einzugravieren, während die erste Schicht 6 an dieser Stelle durch den Infrarot-Laserstrahl LS nicht zerstört wird, d. h. intakt bleibt. In dem in Figur 1 dargestellten Fall erfolgt die Bestrahlung mit dem Infrarot-Laserstrahl LS von der Sichtseite aus (also hier von oben) durch das Trägerelement 5 bzw. die Platte 5 und die erste Schicht 6 hindurch. Hierfür wird ein Nd-YAG Laser 8 eingesetzt.

Grundsätzlich könnte aber die Gravur auch von der Unterseite aus erfolgen; in diesem Fall kann ein Nd-YAG oder ein CO₂ Laser zum Einsatz kommen, wie in Figur 2 dargestellt.

Nach der Gravur kann die Markierung 4 durch eine Hinterleuchtung mit sichtbarem Licht L, welches von einer Strahlungsquellenanordnung 9, hier einer RGB-LED-Anordnung 9, mit einstellbarer Farbe und Intensität (Helligkeit), ausgesendet wird, sichtbar gemacht werden, da die zweite Schicht 7 für das Licht L undurchlässig ist und nur im Bereich der Markierung 4 ein Anteil LD des Lichts L durch die erste Schicht 6 hindurchscheint.

Ist die Strahlungsquellenanordnung 9 ausgeschaltet, so tritt kein Licht L durch die Markierung 4 und die Markierung 4 ist von der Sichtseite aus für einen Betrachter mit bloßem Auge nicht sichtbar, da ja die erste Schicht 6 intakt ist und ebenso schwarz wie die zweite Schicht 7 ist.

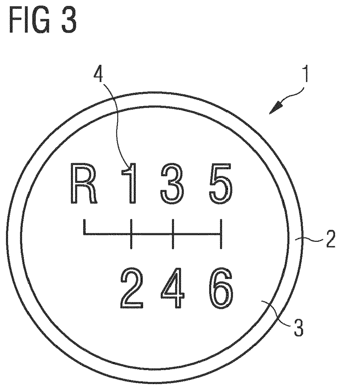

Ein solches Objekt 3 lässt sich insbesondere als Anzeigeelement 3 in einer Armatur oder dergleichen nutzen. Als Beispiel ist hierfür ist in Figur 3 eine Deckplatte 3 in einem Schaltknauf 1 eines Kraftfahrzeugs gezeigt. Diese Deckplatte 3 deckt beispielsweise eine Kavität (nicht in Figur 3 dargestellt) in dem Schaltknauf 1 nach oben hin ab und wird hierzu von einem Ring 2 oder dergleichen eingefasst bzw. gehalten. In der Kavität befindet sich zum Beispiel eine Strahlungsquellenanordnung 9 zur Hinterleuchtung der Deckplatte 3, wenn die Zündung des Kraftfahrzeugs eingeschaltet ist, wodurch die Markierung 4 - hier das Schaltschema 4 - angezeigt wird. Bei ausgeschalteter Zündung ist das Schaltschema 4 hingegen unsichtbar und der Schaltknauf 1 wirkt z. B. (bei entsprechend gewähltem glänzenden Trägermaterial 5) glänzend schwarz.

In ähnlicher Weise können so z. B. auch Anzeigeelemente 3 an anderen Stellen realisiert werden, z. B. in einem Armaturenbrett, oder auch außerhalb von Fahrzeugen, wie beispielsweise in Steuerungsanlagen für die industrielle Anwendung und dergleichen.

Es wird abschließend noch einmal darauf hingewiesen, dass es sich bei den vorhergehend detailliert beschriebenen Ausführungsbeispielen um solche handelt, welche vom Fachmann in verschiedenster Weise modifiziert werden können, ohne den Bereich der Erfindung zu verlassen. Weiterhin schließt die Verwendung der unbestimmten Artikel "ein" bzw. "eine" nicht aus, dass die betreffenden Merkmale auch mehrfach vorhanden sein können.

### Bezugszeichenliste

- 1: Schaltknauf
- 2: Ring
- 3: Objekt
- 4: Markierung
- 5: Trägerelement
- 6: erste Schicht (erfindungsgemäße Zusammensetzung)
- 7: zweite Schicht (Deckschicht)
- 8: IR-Laser
- 8': IR-Laser / CO₂-Laser
- 9: Hinterleuchtungseinrichtung
- L: Licht aus Hinterleuchtungseinrichtung
- LS: Laserstrahl
- LD: durchscheinender Anteil des Lichts

## Patentansprüche

1. Zusammensetzung umfassend
- zumindest eine achromatische Komponente und
- zumindest eine chromatische Komponente,
wobei die Zusammensetzung eine Transluzenz für Licht im infraroten Bereich und vorzugsweise im sichtbaren Bereich aufweist.

2. Zusammensetzung nach Anspruch 1, wobei die achromatische Komponente ausgewählt ist aus einem polyzyklischen aromatischen Kohlenwasserstoff, insbesondere aus einem Perylen.

3. Zusammensetzung nach Anspruch 1 oder 2, wobei die chromatische Komponente ausgewählt ist aus einem Dioxazin.

4. Zusammensetzung nach einem der vorhergehenden Ansprüchen, vorzugsweise ein Lack, nach einem der vorhergehenden Ansprüche, wobei die Zusammensetzung ferner ein Bindemittel enthält, welches bevorzugt ausgewählt ist aus einem Polymer, vorzugsweise aus einem Acrylat und/oder einem Polyester und/oder einem Polyurethan und/oder einem Epoxyhaltigen Polymer und/oder einem Polycarbonat und/oder einem Silicon sowie deren Harze, besonders bevorzugt aus einem Acrylat und/oder dessen Harzen.

5. Zusammensetzung nach einem der vorhergehenden Ansprüchen, wobei die Zusammensetzung ferner
zumindest ein Lösungsmittel, vorzugsweise zumindest ein organisches Lösungsmittel,
und/oder
zumindest ein Netz- und/oder Dispergiermittel
und/oder
zumindest ein Verlaufsadditiv umfasst.

6. Objekt (3), vorzugsweise Anzeigeelement (3), umfassend ein Trägerelement (5), auf welches zumindest bereichsweise eine erste Schicht (6) mit einer Zusammensetzung nach einem der vorhergehenden Ansprüche aufgebracht ist.

7. Objekt nach Anspruch 6, wobei das Trägerelement (5) einen Kunststoff, bevorzugt ein thermoplastisches Polymer, besonders bevorzugt auf Basis von Acryl, Polycarbonat, Acrylnitrylbutadienstyrol, Polyvinylchlorid, Polypropylen, Polyethylen, Polyoxymethylen, Polyphenylensulfid und/oder Polyamid, insbesondere ein Acrylglas, insbesondere bevorzugt auf Basis von Polymethylmethacrylat, umfasst.

8. Objekt nach Anspruch 6 oder 7 wobei auf das Trägerelement (5) zumindest bereichsweise überlappend mit der ersten Schicht (6) eine weitere Schicht (7) aufgebracht ist.

9. Elektronische Ausrüstung und/oder Armatur mit einem Objekt (3) gemäß einem der Ansprüche 6 bis 8.

10. Verfahren zur Herstellung einer Zusammensetzung gemäß einem der Ansprüche 1 bis 5, wobei das Verfahren folgende Schritte umfasst
(i) Bereitstellen einer achromatischen Komponente,
(ii) Bereitstellen einer chromatischen Komponente,
(iii) Zusammenführen der chromatischen Komponente und der achromatischen Komponente,
(iv) optional Zugabe der Mischung aus Schritt (iii) zu einem Polymer, insbesondere zu einem Acrylat-Polymer,
(v) optional Zugabe weiterer Additive.

11. Zusammensetzung gemäß einem der Ansprüche 1 bis 5, wobei die Zusammensetzung durch ein Verfahren gemäß Anspruch 10 erhältlich ist.

12. Verfahren zur Herstellung eines Objekts (3), wobei das Verfahren folgende Schritte umfasst
(iv) Beschichtung eines Trägerelements (5) zumindest bereichsweise mit einer ersten Schicht (6), umfassend die Zusammensetzung, vorzugsweise eines Lacks, gemäß einem der Ansprüche 1 bis 5,
(v) Vorzugsweise zumindest bereichsweise Beschichtung des Trägerelements (5) mit mindestens einer die erste Schicht (6) zumindest bereichsweise überlappendenden zweiten Schicht (7), wobei die zweite Schicht (7) eine chromatische Komponente umfasst,
(iii) optional zumindest teilweises Entfernen der zweiten Schicht (7) mit Hilfe einer Strahlungsquelle (9) zum Erhalt einer Markierung (4), insbesondere eines Musters und/oder eines Symbols.

13. Objekt gemäß einem der Ansprüche 6 bis 8, wobei das Objekt (3) durch ein Verfahren gemäß Anspruch 12 erhältlich ist.

14. Verwendung einer Zusammensetzung gemäß einem der Ansprüche 1 bis 5 zur Herstellung eines Objekts (3) mit einer Markierung (4), vorzugsweise eines Anzeigeelements (3) oder eines Teils eines Anzeigeelements, welches bei einer Hinterleuchtung erkennbar ist.

15. Verwendung eines Objekts (3) gemäß einem der Ansprüche 6 bis 8 als Anzeigeelement (3) oder eines Teils eines Anzeigeelements für eine elektronischen Ausrüstung und/oder eine Armatur.
